# EUROPÄISCHE PATENTANMELDUNG

(11) **EP 1 189 037 A1**
(43) Veröffentlichungstag der Anmeldung: **20.03.2002**
(21) Anmeldenummer: 00119892.8
(22) Anmeldetag: 13.09.2000
(51) Int. Cl.: G01F 1/84

(54) **Coriolisdurchflussmesser mit digitalem Steuerungssystem**

(71) Anmelder: Endress + Hauser Flowtec AG, CH-4153 Reinach BL 1 (CH)
(72) Erfinder: Matt, Christian, 4147 Aesch (BL) (CH)
(74) Vertreter: Andres, Angelika

(57) **Zusammenfassung**

Bei einer Mess-und Betriebsschaltung für einen Coriolis-Massedurchflußmesser ist ein Digitalprozessor DSP vorgesehen, der von den Schwingungssensorsignalen nur das

Differenzsignal D und das eine Sensorsignal S1 auswertet.

Für das Differenzsignal D wird die In-Phase-Komponente I und die Quadraturkomponenten Q
bestimmt und die Verstärkung des zweiten Sensorsignals S2 so geregelt, daß die In-Phase-Komponente I verschwindet.

Aus der Quadraturkomponente Q wird der Massedurchfluß m bestimmt.

## Beschreibung

Die Erfindung betrifft eine Mess- und Betriebsschaltung für einen Coriolis-Massedurchflußmesser.

Coriolis-Massedurchflußmesser werden vielfach zur Bestimmung des Massedurchflusses eines Fluids in einem Rohrleitungsabschnitt eingesetzt. Das Fluid durchströmt dabei mindestens ein schwingendes Messrohr.
Bei den meisten Coriolis-Massedurchflußmessern sind am Messrohr ein Schwingungserreger und zwei Schwingungssensoren angeordnet,
Messrohr und Fluid bilden zusammen ein schwingungsfähiges System, das normalerweise auf seiner Resonanzfrequenz angeregt wird. Die Resonanzfrequenz hängt unter anderem vom Material und den Abmessungen des Messrohrs ab. Sie variiert auch mit der Dichte des strömenden Fluids.
In einigen Fällen wird das Messrohr nicht auf der Resonanzfrequenz sondern auf einer benachbarten Frequenz angeregt.
Die beiden Schwingungssensoren erfassen die Schwingungsbewegung des Messrohrs an zwei in Strömungsrichtung beabstandeten Stellen und wandeln die Schwingungsbewegung des Messrohrs in Sensorsignale um. Beide Sensorsignale weisen die gleiche Frequenz wie die Schwingungsbewegung des Messrohrs auf. Sie sind aber gegeneinander phasenverschoben.
Die Phasenverschiebung ist ein Maß für den Massedurchfluss.
Die Sensorsignale werden in einer in einer Mess-Teilschaltung ausgewertet und in ein zum Massedurchfluss des Fluids proportionales Signal umgewandelt. Neben dem Massedurchfluss können auch weiter Eigenschaften des Fluids wie z. B. seine Dichte bestimmt werden. Hierzu wird z. B. die Frequenz der Schwingungsbewegung des Messrohrs ausgewertet.

In der US-A 4801897 ist eine Erreger-Teilschaltung beschrieben, die nach Art einer analogen Phase-Lock- Loop-Regelung aufgebaut ist. Die Erregerfrequenz stellt sich dabei auch bei veränderlicher Fluiddichte automatisch auf die Resonanzfrequenz des schwingungsfähigen Systems ein.
Die bekannten Mess-Schaltungen arbeiten entweder analog wie z. B. in der EP- A698 783 bzw. der US- A 4895030 oder digital wie z. B. in der EP- A 702 212 bzw. der US A54 29 002
beschrieben.

Aus der EP- A 698 783 ist eine Messschaltung beschrieben, die einen analogen Regelkreis aufweist, der die beiden Sensorsignale auf gleiche Amplitude regelt.

Aus der EP A 866 319 ist eine weiter Mess- und Betriebsschaltung bekannt. Bei dieser Schaltung werden die beiden Sensorsignale vor der Weiterverarbeitung verstärkt, wobei ein Verstärkungsfaktor eines Verstärkers variabel ist.
In einem Digitalprozessor werden die Summe und die Differenz der beiden Sensorsignale sowie eines der Sensorsignale ausgewertet.
Für die Genauigkeit der Messung ist es wesentlich, daß die beiden Sensorsignale nach ihrer Verstärkung gleiche Amplitude besitzen. Die hierfür benötigte Amplitudenregelung wertet die Summe und die Differenz der beiden Sensorsignale aus.
Für die eigentliche Bestimmung des Massedurchflusses wird neben dem Differenzsignal noch das Signal eines Sensors benötigt.
Insgesamt werden bei dieser Schaltung drei analoge Schwingungssignale gebildet und anschließend in einer Rechnereinheit weiterverarbeitet. Für die Signalverarbeitung in der Rechnereinheit ist für jedes Schwingungssignal mindestens einen A/D-Wandler notwendig.

Aufgabe der Erfindung ist es eine Mess-und Betriebsschaltung für einen Coriolis-Massedurchflußmessers zu schaffen, bei der weniger Schwingungssignale gebildet und ausgewertet werden müssen und die trotzdem eine ausreichende Genauigkeit besitzt und die einfach und kostengünstig realisierbar ist.

Gelöst wird diese Aufgabe durch eine Mess-und Betriebsschaltung für einen Coriolis-Massedurchflußmesser
mit einem Messaufnehmer mit mindestens einem Meßrohr,
an dem ein ersten und ein zweiter Schwingungssensor, in Stömungsrichtung beabstandet voneinander, und ein Schwingungserreger angeordnet sind,
die umfaßt:
   einen ersten Verstärker der mit dem ersten Schwingungssensor verbunden ist
   einen zweiten Verstärker der mit dem zweiten Schwingungssensors verbunden ist
   einen ersten A/D-Wandler zur Erzeugung eines Schwingungssignals S1 das proportional zum Ausgangssignal des ersten Schwingungssensors ist, der mit dem ersten Verstärker verbunden ist,
   einer Differenzstufe, deren beide Eingänge mit dem ersten bzw. mit dem zweiten Verstärker verbunden sind
   einen zweiten A/D-Wandler, der der Differenzstufe nachgeschaltet ist und der zur Erzeugung eines Differenzsignals D, das proportional zur Differenz der verstärkten Ausgangssignale des ersten und des zweiten Schwingungssensors ist,
   dient,
ein Digitalprozessor der von den Schwingungssensorsignalen nur das Differenzsignal D und das eine Sensorsignal S1 auswertet und der folgende Verfahrensschritte ausführt:
   a) Bestimmung der Amplitude AMS1 des Sensorsignals S1
   b)Bestimmung der In-Phase-Komponente I und der Quadraturkomponenten Q des Differenzsignals D bezüglich dem Sensorsignal S1 als Referenzsignal
   c) Regelung der Verstärkung des zweiten Verstärkers derart, daß die In-Phase-Komponente I des Differenzsignals verschwindet
   d)Berechnung des Massedurchflusses über die verbleibende Quadraturkomponente Q gemäß der Formel m ∼ Q / (AMS1 ∗ f)

Nachfolgend ist die Erfindung anhand eines in der Zeichnung dargestellten bevorzugten Ausführungsbeispiels näher erläutert.
Es zeigen:
Fig. 1 Messaufnehmer eines Coriolis-Massedurchflußmessers in schematischer Darstellung,
Fig. 2 Blockschaltbild einer Mess- und Betriebsschaltung für einen Coriolis-Massedurchflußmessers
Fig. 3 Blockschaltbild einzelner Verfahrensschritte der Messschaltung gemäß Fig.2

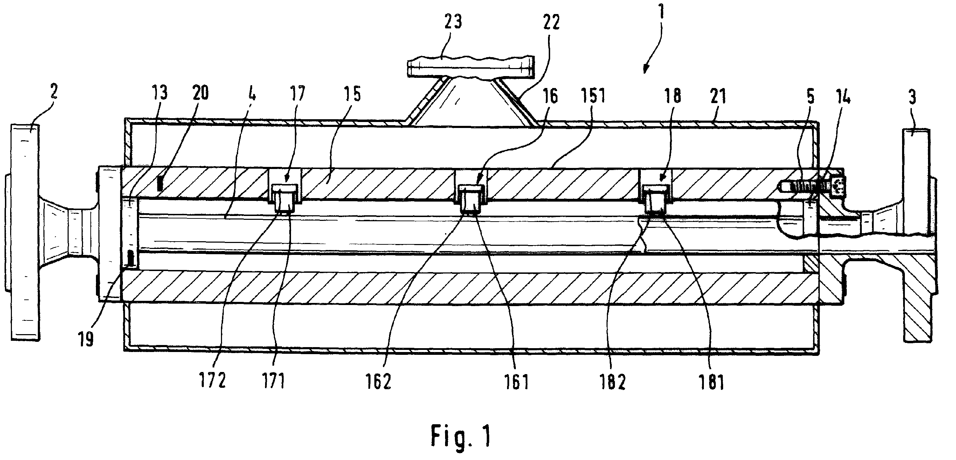

In Fig. 1 ist ein Messaufnehmer 1 für einen Coriolis-Massedurchflußmesser in schematischer Darstellung gezeigt. Der Messaufnehmer 1 ist in einer nicht dargestellten Rohrleitung angeordnet in der ein Fluid F strömt, dessen Massedurchfluss eine der interessierenden Grössen ist. Die Verbindung mit der Rohrleitung erfolgt über die beiden Flansche 2,3.

Der Messaufnehmer 1 weist ein einziges gerades Messrohr 4 auf, das einlassseitig über eine Endplatte 13 am Flansch 2 und auslaßseitig über eine Endplatte 14 am Flansch 3 fixiert ist.

Die erfindungsgemäße Mess- und Betriebsschaltung ist nicht auf diesen speziellen Messaufnehmer 1 mit einem einzigen geraden Messrohr beschränkt. Sie kann in Verbindung mit den verschiedenen bekannten Messaufhehmern eingesetzt werden. Zu erwähnen sind z.B. Messaufnehmer mit einem Messrohr mit Auslegermasse, wie z.B. in der EP 97 81 0559 beschrieben, Messaufnehmer mit einem gebogenen Messrohr (EP 96 10 9242) sowie Messaufnehmer mit zwei parallelen geraden oder gebogenen Messrohren (US 4793191 bzw. US 41 27 028).

Die Flansche 2, 3 und die Endplatten sind an oder in einem Trägerrohr 15 befestigt.

Zur Erzeugung der Messrohrschwingung ist in der Mitte zwischen den beiden Endplatten 13, 14 am Messrohr 4 ein Schwingungserreger 16 angeordnet. Bei dem Schwingungserreger 16 kann es sich z.B. um einen elektromagnetischen Antrieb bestehend aus einem Permanentmagnet 161 und einer Spule 162 handeln.
Die Spule 162 ist am Tragrohr 15 und der Permanentmagnet 161 am Messrohr 4 fixiert.

Über den in der Spule 162 fließenden Strom läßt sich die Amplitude und die Frequenz der Biegeschwingung des Messrohrs 4, die in der Zeichenebene verläuft, steuern.
In der Zeichenebene treten auch die Corioliskräfte auf, die bewirken, daß nicht mehr alle Punkte entlang des Messrohrs 4 in Phase schwingen.
Die Schwingungsbewegung des Messrohrs 4 wird mit Hilfe zweier Schwingungssensoren 17 bzw. 18, die etwa symmetrisch zum Schwingungserrereger 16, ebenfalls am Tragrohr 15 angeordnet sind, aufgenommen. Bei den Schwingungssensoren 17 bzw. 18 kann es sich z. B. um elektromagnetische Wandler handeln, die ähnlich der Anordnung Permanentmagnet-Spule des Schwingungserregers 16 aufgebaut sind.
Die beiden Permanentmagnet 171, 181 sind am Messrohr 4 und die beiden Spulen 172, 182 am Tragrohr 15 fixiert. Die Bewegung des Messrohrs 4 bewirkt über die Magnete 171, 181 eine Induktionsspannung in der jeweiligen Spule 172, 182, die als analoges Sensorsignal X17 bzw. X18 abgegriffen wird.

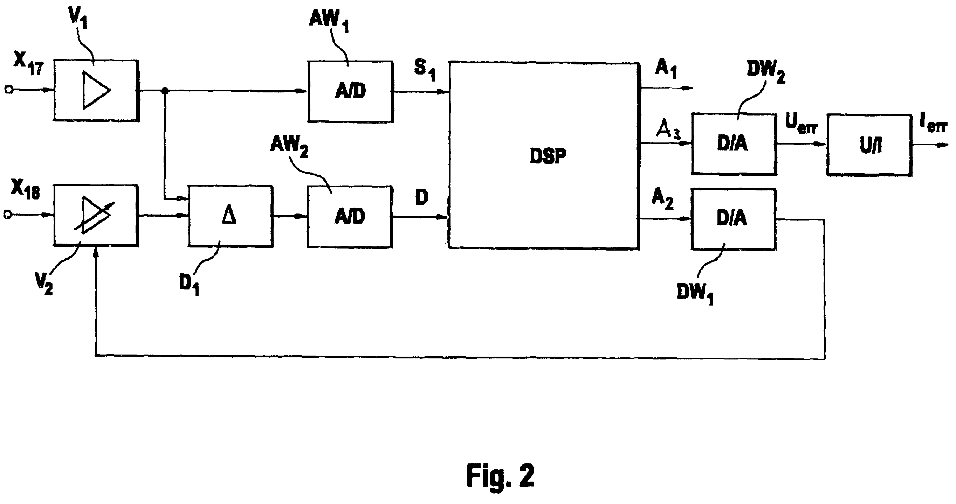

Ein Coriolis-Massedurchflußmesser besteht in der Regel aus einem Messaufnehmer und einer zugehörigen Mess- und Betriebsschaltung. Fig. 2 zeigt ein Blockschaltbild einer zum Messaufnehmer 1 gehörenden Mess- und Betriebsschaltung, die u. a. die Auswertung der Sensorsignale durchführt und die Schwingungserregung regelt.
Die beiden Sensorsignale X17 und X18 werden jeweils einem ersten Verstärker V1 bzw. einem zweiten Verstärker V2 zugeführt. Zumindest die Verstärkung des Verstärkers V2 ist variabel mit einem einstellbaren Verstärkungsfaktor VF.
Der Verstärker V1 ist mit einem ersten A/D-Wandler AW1 und parallel dazu mit einem Eingang einer Differenzstufe D1 verbunden.
Der Verstärker V2 ist mit einem weiteren Eingang der Differenzstufe D verbunden. Der Ausgang der Differenzsztufe D1 ist mit einem zweiten A/D-Wandler AW2 verbunden.
An den beiden Ausgänge der A/D-Wandler AW1 bzw. AW2 liegt das Sensorsignal S1 bzw. Differenzsignal D in digitalisierter Form. Beide Ausgänge sind jeweils mit einem Digitalprozessor DP verbunden.
Der erste Verstärker V1 und der erste A/D-Wandler AW1 bilden einen ersten Schwingungssignalweg SW1.
Der zweite Verstärker V2, die Differenzstufe D1 sowie der zweite A/D-Wandler AW2 bilden einen zweiten Schwingungssignalweg SW2.

Dem Digitalprozessor DP werden somit zur Bestimmung des Massedurchflusses von den beiden Schwingungssensoren S1 bzw. S2 nur das digitale Sensorsignal S1 und das digitale Diffrenzsignal D über zwei Schwingungssignalwege SW1 bzw. SW2 zugeführt.
Der Digitalprozessor DP liefert an einem ersten Ausgang A1 als Ausgangssignal den Massedurchfluss m. Ein zweiter Ausgang A2 des Digitalprozessors DP, der ein Verstärkungssignal VS liefert, ist mit einem Eingang eines D/A-Wandlers DW1 verbunden, dessen Ausgang mit dem Verstärker V2 verbunden ist.

Mit Hilfe des Verstärkungssignals VS wird der Verstärkungsfaktor VF des zweiten Verstärkers V2 eingestellt.
Ein Dritter Ausgang A3 liefert ein Signal das den Erregerstrom Iₑᵣᵣ
für die Schwingungsanregung der Meßrohre steuert.

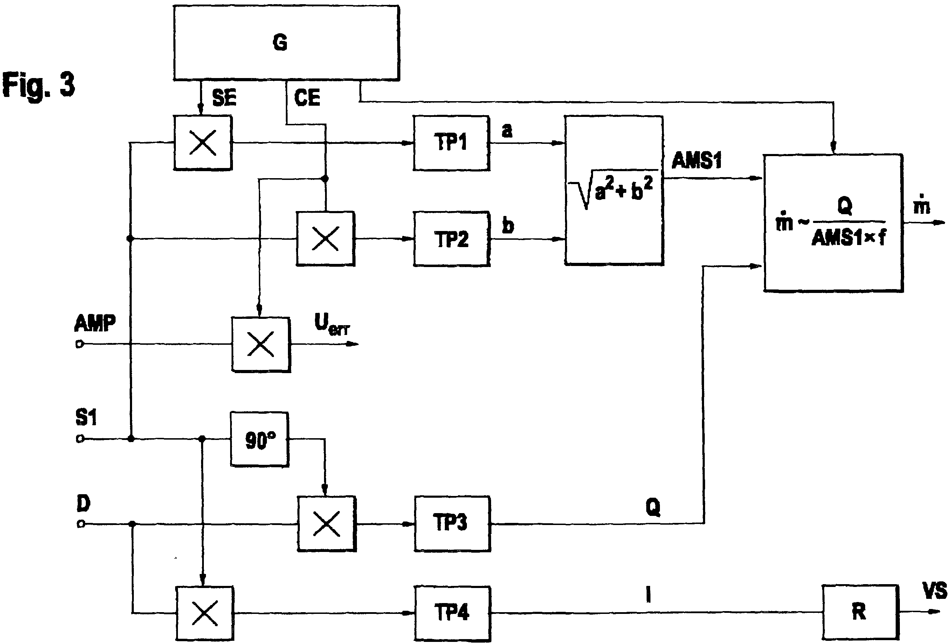

Fig. 3 zeigt in schematischer Darstellung die einzelnen Verfahrensschritte, die zur Bestimmung des Massedurchflusses m notwendig sind .

### Verfahrenschritt a) Bestimmung der Amplitude AMS1 des Sensorsignals S1

Zur Amplitudenbestimmung des digitalen Sensorsignals S1 wird dieses mit einem Sinuseinheitssignal SE und einem Cosinuseinheitsignal CE multipliziert und anschließend jeweils mit einem Tiefpassfilter T gefiltert. Nach den Tiefpassfilter T erhält man zwei Amplitudenwerte a und b, die die Anteile des Sensorsignals S1 entsprechend den beiden Einheitssignalen SE und CE angeben. Durch Wurzelziehen aus der Quadratsumme a² + b² erhält man die Amplitude AMS1 des Sensorsignals S1, gemessen in einem Koordinatensystem, das von den beiden Einheitssignalen SE bzw. CE aufgespannt wird.

### Verfahrenschritt b) Bestimmung der In-Phase-Komponente I und der Quadraturkomponenten Q des Differenzsignals D bezüglich dem Sensorsignal S1 als Referenzsignal

Das Differenzsignal D wird mit dem Sensorsignal S1 multipliziert und anschließend in einem Tiefpass TP4 gefiltert, dadurch erhält man die In-Phase-Komponente I des Differenzsignals D.
Das Differenzsignal D wird ausserdem mit dem um 90° verschobenen Sensorssignal
S1 multipliziert und in einem Tiefpass T3 gefiltert. Dadurch erhält man die Quadraturkomponente Q des Differenzsignals D

### Verfahrenschritt c) Regelung der Verstärkung des zweiten Verstärkers derart, daß die In-Phase-Komponente I des Differenzsignals D verschwindet

Die In-Phase-Komponente I des Differenzsignals D wird einem Regler R zugeführt, der ein Verstärkungssignal VS liefert, mit Hilfe dessen der Verstärkungsfaktor VF der Verstärkung des Verstärkers V2 so geregelt wird, daß die Komponente I verschwindet.

Wenn die In-Phase-Komponente I des Differenzsignals D verschwindet, sind die beiden Signalamplituden an den Ausgängen der beiden Verstärkern V1 bzw. V2 fast gleich groß. Der Unterschied in den Signalamplituden wird mit kleiner werdender Phasenverschiebung zwischen den Sensorsignalen X17 bzw. X18 ebenfalls immer kleiner.

### Verfahrenschritt d) Berechnung des Massedurchflusses über die verbleibende Quadraturkomponente Q gemäß der Formel m ∼ Q / (AMS1 ∗ f)

Aus den so gewonnenen Werten für die Quadraturkomponente Q und der Amplitude wird entsprechend der Formel m ∼ Q / (AMS1 ∗ f) der Massedurchfluss m bestimmt. Die Frequenz f wird von einem Generator G geliefert.
Im Generator G werden die beiden Einheitssignale SE und CE digital erzeugt.
Das Einheitscosinussignal CE wird mit einer variablen Amplitude AMP zum Signal Uerr multipliziert.
Mit Hilfe von Uerr wird eine Treiberschaltung TR angesteuert die den Erregerstrom für den Schwingungserreger16 liefert.

Um genau auf der Resonanzfrequenz des schwingungsfähigen Systems anzuregen, wird im Digitalprozessor DP die Phasenverschiebung dφ zwischen dem Erregersignal Uerr und der Antwortfunktion des Systems dem Sensorsignal S1 bestimmt.

Die Frequenz f der Einheitssignale SE und CE wird so geregelt, daß die Phasenverschiebung dφ genau zu Null wird. In diesem Fall ist die anregende Kraft gerade in Phase mit der Geschwindigkeit der Rohrschwingung des Messrohrs 4.

## Patentansprüche

1. Mess-und Betriebsschaltung für einen Coriolis-Massedurchflußmesser
mit einem Messaufnehmer mit mindestens einem Meßrohr (1),
an dem ein ersten und ein zweiter Schwingungssensor (17,18), in Stömungsrichtung beabstandet voneinander, und ein Schwingungserreger (16) angeordnet sind,
die umfaßt:
einen ersten Verstärker V1 für das Ausgangssignal des ersten Schwingungssensors (17)
einen zweiten Verstärker V2 für das Ausgangssignal des zweiten Schwingungssensors (18)
einen ersten A/D-Wandler AW1 zur Erzeugung eines Schwingungssignals S1 das proportional zum Ausgangssignal des ersten Schwingungssensors (17) ist
einen zweiten A/D-Wandler AW2 dem einer Differenzstufe D vorgeschaltet ist, zur Erzeugung eines Differenzsignals D das proportional zur Differenz der verstärkten Ausgangssignale des ersten und des zweiten Schwingungssensors (17, 18) ist
ein Digitalprozessor DSP der von den Schwingungssensorsignalen nur das Differenzsignal D und das eine Sensorsignal S1 auswertet und der folgende Verfahrensschritte ausführt:
e)Bestimmung der Amplitude AMS1 des Sensorsignals S1
f) Bestimmung der In-Phase-Komponente I und der Quadraturkomponenten Q des Differenzsignals D bezüglich dem Sensorsignal S1 als Referenzsignal
g)Regelung der Verstärkung des zweiten Verstärkers derart, daß die In-Phase-Komponente I des Differenzsignals D verschwindet
h)Berechnung des Massedurchflusses m über die verbleibende Quadraturkomponente Q gemäß der Formel m ∼ Q / (AMS1 ∗ f)
